# EUROPEAN PATENT SPECIFICATION

(11) **EP 0 730 827 B1**
(45) Date of publication and mention of the grant of the patent: **05.06.2002**
(21) Application number: 96103324.8
(22) Date of filing: 04.03.1996
(51) Int. Cl.: A23G 1/20, A23G 3/02

(54) **Moulding of chocolate**
Formen von Schokoladen
Moulage de chocolat

(30) Priority: 08.03.1995 GB 9504686
(43) Date of publication of application: 11.09.1996
(73) Proprietor: SOCIETE DES PRODUITS NESTLE S.A., 1800 Vevey (CH)
(72) Inventor: Jury, Mark, Thirsk, North Yorkshire Y07 1FZ (GB)
(74) Representative: Pate, Frederick George

(56) References cited:
- EP-A- 0 017 104
- EP-A- 0 548 814
- EP-A- 0 603 467
- FR-A- 570 732
- GB-A- 1 527 240
- US-A- 1 628 251
- US-A- 1 649 307
- US-A- 3 307 503

## Description

The present invention relates to the in-package moulding of fat-containing confectionery material more particularly to a process for moulding of chocolate in a solid or semi-solid state into a flexible material.

Moulding of chocolate is normally carried out in the liquid state by casting, i.e. pouring the molten chocolate into a mould followed by cooling. The moulded chocolate is usually demoulded quite easily after cooling, due to the thermal contraction of the chocolate as it sets, giving a product with an attractive glossy surface. However, the disadvantages of conventional chocolate moulding are the requirement for cooling tunnels which consume space and time, the product cannot be wrapped directly because of the cooling step and it is difficult to achieve exact weight control of shell moulded products.

In our co-pending EP-A-93114251.7 we describe a process for plastically extruding a fat-containing confectionery material which comprises feeding the fat containing confectionery material into an extrusion device and applying pressure to the fat-containing confectionery material in a substantially solid or semi-solid non-pourable form upstream of a flow constriction whereby the temperature, pressure, contraction ratio and extrusion rate are such that the fat-containing confectionery material is extruded substantially isothermally and remains in a substantially solid or semi-solid non-pourable form to produce an axially homogeneous extruded product and which has a temporarily flexibility or plasticity enabling it to be physically manipulated or plastically deformed e.g. forcing into a mould. EP-A-93114251.7 also describes an injection moulding process where the temporary flexible extruded product is injection moulded under pressure at a temperature below the normal melting point of chocolate. This injection moulding process is substantially isothermal and subsequent cooling is therefore unnecessary so that the product is suitable for demoulding immediately after the injection moulding is complete. However, because a subsequent cooling is not necessary, thermal contraction does not necessarily occur and, in some circumstances, demoulding and obtaining a high quality surface finish may be difficult to achieve.

We have now found, surprisingly, that it is possible to injection mould the solid or semi-solid non-pourable extruded chocolate directly into a variety of materials lining the mould whereby the moulded chocolate covered with the lining material is easily demoulded and has an attractive glossy surface.

Accordingly, the present invention provides a process for injection moulding an extruded fat-containing confectionery material which comprises feeding the fat-containing confectionery material into an extrusion device and applying pressure to the fat-containing confectionery material in a substantially solid or semi-solid non-pourable form upstream of a flow constriction whereby the temperature, pressure, contraction ratio and extrusion rate are such that the fat-containing confectionery material is extruded substantially isothermally and remains in a substantially solid or semi-solid non-pourable form and which has a temporary flexibility or plasticity, characterised in that, while the extruded product exhibits the temporary flexibility, injection moulding the extruded product substantially isothermally into a mould which is lined with a demouldable food-grade solid material capable of being formed into the shape of the mould and then demoulding the product covered with the food-grade solid material.

It should be understood that the temporary flexibility or plasticity of the extruded product enables the product to be physically manipulated or plastically deformed before it loses its flexibility or plasticity, so that it may completely fill the mould in one piece without leaving gaps or without crumbling in the mould.

The details of the extrusion of the fat-containing confectionery material are described in our co-pending EP-A-93114251.7 whose disclosure is hereby incorporated into the present specification.

By "substantially isothermally" in this invention we mean that the temperature of the fat-containing confectionery material remains substantially unchanged under the conditions of the extrusion from the input to the outlet of the flow constriction and during injection moulding if there is no external heating or cooling means: the use of external heating or cooling means is not excluded as long as the material being extruded remains in a substantially solid or semi-solid non-pourable state throughout the extrusion and injection moulding. In other words, the temperature of the fat-containing confectionery material is not caused to increase substantially by the extrusion or injection moulding process itself.

The fat-containing confectionery material may be, for instance, plain, white or milk chocolate or chocolate substitutes containing cocoa butter replacements, stearines, coconut oil, palm oil, butter or any mixture thereof; nut pastes such as peanut butter and fat; praline; confectioner's coatings used for covering cakes usually comprising chocolate analogues with cocoa butter replaced by a cheaper non-tempering fat; or materials comprising non-cocoa butter fats, sugar and milk, e.g. Caramac.

The injection moulding temperature of the fat-containing confectionery material may be from as low as 0°C to about 35°C depending on the composition, particularly the amount and type of fat present. When plain chocolate is used as the extruded feed material, the injection moulding temperature may be from 10° to 34°C, more usually from 15° to 32°C, preferably from 18° to 30°C and more preferably from 20° to 27°C. In the case of white chocolate, the injection moulding temperature may be from 5° to 28°C, more usually from 15° to 27°C, preferably from 17° to 26°C and more preferably from 19° to 25°C. In the case of milk chocolate, the injection moulding temperature may be from 5°C to 30°C, more usually from 15°C to 28°C, preferably from 18° to 27°C and more preferably from 20° to 26°C. It should be understood that, in this invention, when the chocolate is injection moulded at a temperature from 28° to 34°C it is in a solid or semi-solid non-pourable state after being previously set hard in contrast to chocolate which has not been previously set hard such as recently tempered chocolate which is usually still pasty and pourable at such temperatures.

The injection moulding is much easier to control and there is significantly improved weight control consistency when compared with normal shell moulding using molten chocolate. In addition, in contrast to most other chocolate moulding processes, the final product does not require cooling after the injection moulding has occurred.

The use of a flow constriction, which forms a narrow gate through which the extruded product enters the mould cavity, has the following advantages:
a)the injection point is less visible on the product;
b) detachment of the product gate is easier whereas the use of a large gate may deform the product.

As stated above, in EP-A-93114251.7 chocolate is injection moulded directly into a metal or plastics mould. However, if cold injection moulding is used as described therein, the resulting product may not consistently release due to the lack of contraction in the mould. Furthermore, a consistent glossy surface may be difficult to obtain. The current invention overcomes these disadvantages by the use of the internal lining in the mould which prevents the chocolate from sticking to the mould surface. The lining material can then be easily removed from the product, if desired, due to the inherent flexibility of the lining material.

The food-grade solid material which is used to line the mould, hereinafter referred to as the lining material, may be a plastic or metallic material. As well as being capable of being formed into the shape of the mould, the lining material may be sufficiently flexible to be demoulded from the cavity face of the mould and from the product. For instance, the lining material may be a thin film flexible material or a thicker relatively rigid vacuum-formable material, e.g. made of plastics. The thin film flexible materials may have a thickness of from 5-500 microns, preferably from 10-100 microns, and more preferably from 20-50 microns, e.g. 30 micron polypropylene. The relatively rigid vacuum-formable materials may have a thickness of 50-1500 microns, preferably from 200 to 400 microns, e.g. 300 micron polyvinyl chloride (PVC). In addition, thin film PVC which is sufficiently ductile in both directions such as CLINGFILM or a low density polyethylene may be used. An example of a suitable metallic material is aluminium having a thickness of from 10 to 500 microns, preferably from 50-200 microns. If desired, metallised plastics films may be used, e.g. metallised polypropylene where the metal is aluminium. The material used to line the mould may be chosen, if desired, to increase the shelf life of a product, e.g. it may be a high barrier film. If desired, the lining material may be a laminate. The laminate may comprise two relatively or more plastics materials, e.g. two thin flexible plastics materials, two relatively rigid vacuum-formable plastics materials or a relatively rigid vacuum-formable plastics material and a thin flexible plastics material. Alternatively, the laminate may comprise a plastics material metallised on one or both of its surfaces, e.g. a vacuum formable film and a layer of metallised polyethylene.

The lining material may be preformed into shape by vacuum forming, e.g. by using a mould such as a plastics or metal cavity in the same shape as the object to be injection moulded. The preformed lining material is then placed into the mould against the cavity face to allow injection moulding of the fat containing confectionery material directly into the plastics material.

The lining material may also be formed into shape during the injection moulding process if it has sufficient flexibility or ductility and is sufficiently thin, e.g. 10 to 100 microns such as 20 micron PVC. In this case, the lining material is positioned opposite the injection feed point of the mould and formed into the shape of the mould by injection under pressure of the fat-containing confectionery material.

A further advantage of the present invention is that the lining material may be used as a carrier to facilitate removal of the product from the mould in which case it may be either reused or disposed of and may be recycled.

Alternatively and more preferably, the lining material may remain on the moulded fat confectionery material after demoulding and act as the packaging material for the final product. This latter option eliminates the need for the application of primary packaging further downstream in the process, thereby reducing the need for expensive wrapping equipment. In addition the packaging material may be decorated, e.g. by metallising and/or printing to high quality, to enhance the appearance.

In processes where the product may undergo further treatment, e.g. filling with fondant or ice cream, the lining material may act as a carrier to transport the product through the manufacturing process before the final demould from the lining material. Such lining materials may be manufactured from a resilient material which would allow multiple re-use in the process, and appropriate choice of material could allow recycling after use.

The fat containing confectionery material may be extruded through a flow constriction which may form the injection nozzle or outlet of the extrusion device. In one embodiment, extruded chocolate may flow within channels of the mould (known as "runners" in the plastics industry) and subsequently flow through a narrow gate, e.g. from 100 microns to 5 mm, into a mould lined with a packaging material. The chocolate extrudes into the mould as a flexible filament of semi-solid chocolate, or may flow out from the gate into the mould as a front of solid material - both these types of flow are commonly found in the plastics processing industry. As the extrusion continues, owing to the post-extrusion flexibility of the chocolate, the mould progressively fills with chocolate until all of the mould is filled. At this point the pressure within the mould is sufficient to allow the full consolidation of the chocolate to occur. When this point has been reached no further flow occurs and the extrusion pressure can be released. At this point the mould can be opened and the injection moulded entities removed from the mould either mechanically or, for example, by suction, or by using the packaging material to lift the product from the mould. Typically, in this embodiment, the final product is substantially the same temperature as the feed material.

The injection moulding process of the present invention may also include multi-feed injection into moulds using different components in each feed e.g. fondant, ice cream, etc. In addition, the process may be used for coating centres such as fondant, ice cream, etc which are positioned in the empty mould before injection moulding. The injection moulding process may, if desired, be fully automated.

In all cases the lined product is easily demoulded from the mould cavity since there is no adhesion of the lining to the mould. This therefore produces a moulded product contained within a "skin" of lining material on one surface. When thin plastics films are used, the plastics material can be peeled away from the product to leave the finished product. With the rigid plastics materials, although demoulding is more difficult due to the physical intimacy of the plastics material against the product, the product does not stick to the plastics material, and due to the degree of flexibility inherent to such materials demoulding is possible after flexing the plastics material to allow air to pass behind the plastics material and break the vacuum behind it.

The mould itself may be made of a suitable rigid material such as metal, e.g. steel or a plastics material, e.g. polycarbonate.

The final shape of the injection moulded product may be solid or hollow and the process of the present invention is especially useful for the production of hollow shells such as Easter Eggs.

The present invention will now be further described by way of example only with reference to the following drawings in which
- Figure 1: illustrates a ram extruder adapted to form the injection nozzle of a moulding tool,
- Figure 2: illustrates a schematic drawing of the in-mould packaging system showing the steps of the injection moulding process, and
- Figure 3: illustrates a piston and cylinder and a mould fitted directly underneath the cylinder.

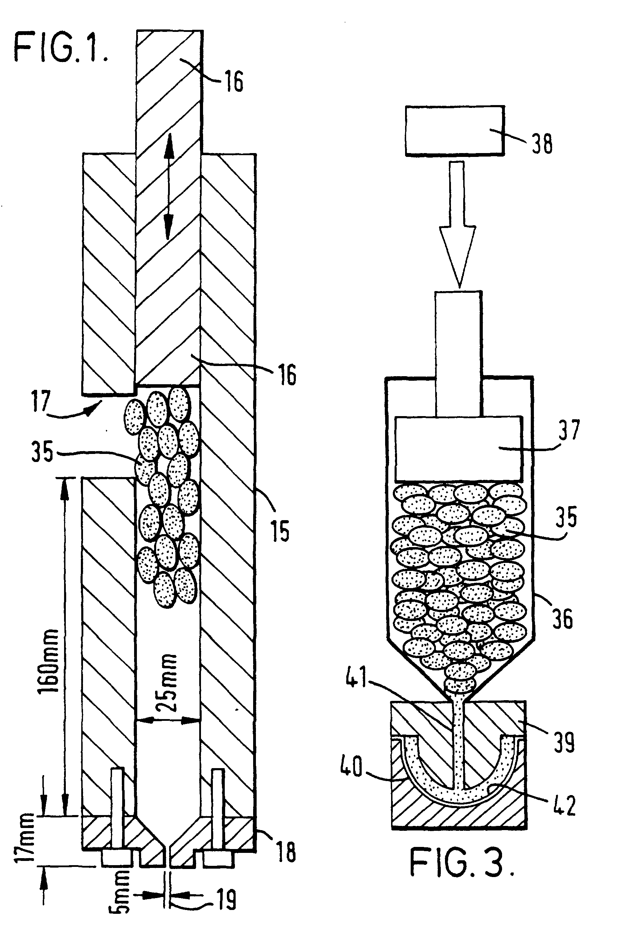

Referring to the drawings, a hydraulically driven ram extruder is shown in Figure 1 and comprises a barrel 15, a hydraulically driven ram 16, feed opening 17, extrusion die 18 having a cross-section of 5 mm diameter and an internal barrel diameter of 25 mm. Chocolate buttons 35 were dropped in the feed opening 17 followed by hydraulically advancing the ram at a pressure of 80 bars and a temperature of 23°C.

A semi-continuous solid non-pourable rod 19 of 5 mm diameter was produced which retained its shape and had an initial flexibility which lasted for about 40 minutes.

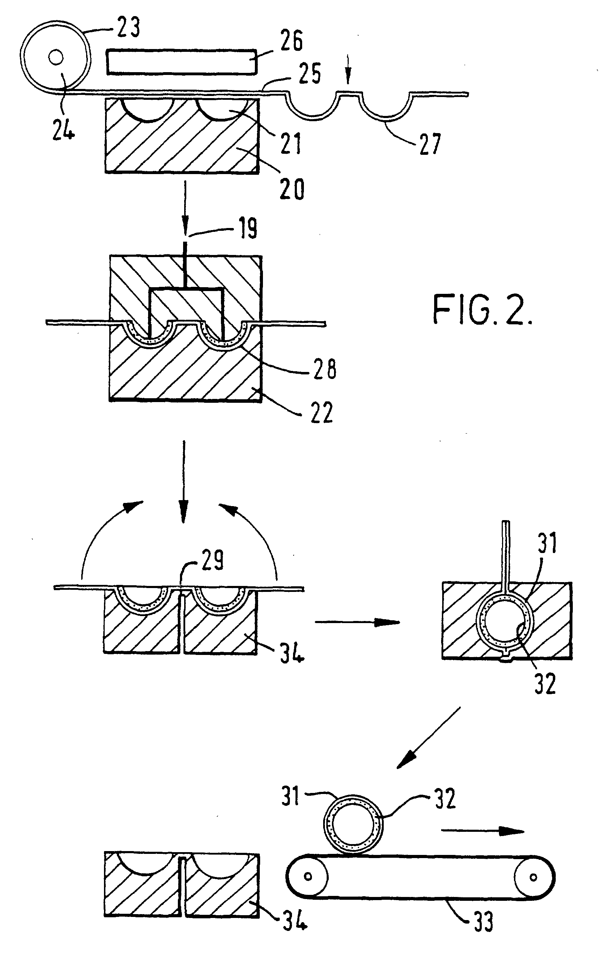

Figure 2 shows a vacuum forming tool mould 20 having a pair of mould cavities 21 having the half-egg shape of the mould cavities 28 of a moulding tool 22. 400 µ polyvinyl chloride 23 (PVC) on a reel 24 is unwound and passes as a sheet 25 above the mould cavities 21 below a heater 26. The sheet is formed by vacuum means (not shown) to give a formed sheet 27.

The formed sheet 27 is placed in the mould cavities 28 of the moulding tool 22, the mould is closed and the flexible extruded chocolate 19 emerging from the extrusion die 18 of the ram extruder shown in Figure 1 is forced into the eggshell shaped mould cavities at 80 bars and at a temperature of 23°C at a rate of 4 g per second. The two halves of the moulding tool are then opened and the PVC sheet containing the two moulded half-shells is released. The PVC is then placed in a sealing block 34 which is closed by means of a hinge 29. When the block 34 is closed, the edges of the PVC film are sealed together by means of heated metal strips incorporated into the sealing block 34. The sealing block 34 also incorporates cutters which remove excess PVC film at the same time as heat sealing takes place. On opening the sealing block 34, the sealed halves are released as a complete egg shape 32 weighing 40 g within a PVC covering 31 with excess PVC packaging film also removed.

The wrapped product is then transported on a conveyor belt 33 for further processing.

Figure 3 shows a metal cylinder 36 having a diameter of 80 mm and a 4 mm opening in the base. Chocolate buttons 35 are loaded into the cylinder.

A metal piston 37 is placed in the cylinder on top of the buttons, and a hand operated hydraulic pump 38 is used to push the piston into the cylinder. The chocolate is compressed at 23°C at a pressure of 80 bars and when fully compacted extrudes through the 4 mm opening at the base of the cylinder. The cylinder is placed on top of a closed mould 39 which contains a hemispherical shell cavity 40 with a 4 mm feed runner 41. The chocolate feeds directly into the mould cavity and fills the mould while still at a temperature of 23°C. The mould contains a vacuum-preformed 50 micron polythene hemisphere film 42 against which the chocolate is injected. When the mould is full, pressure is released and the mould opened. The plastics packaging can be removed with the chocolate shell contained within it.

## Claims

1. A process for injection moulding an extruded fat-containing confectionery material which comprises feeding the fat containing confectionery material into an extrusion device and applying pressure to the fat-containing confectionery material in a substantially solid or semi-solid nonpourable form upstream of a flow constriction whereby the temperature, pressure, contraction ratio and extrusion rate are such that the fat-containing confectionery material is extruded substantially isothermally and remains in a substantially solid or semi-solid nonpourable form and which has a temporary flexibility or plasticity **characterised in that**, while the extruded product exhibits the temporary flexibility, injection moulding the extruded product substantially isothermally into a mould which is lined with a demouldable food-grade solid material capable of being formed into the shape of the mould and then demoulding the product covered with the food-grade solid material.

2. A process according to claim 1 wherein the lining material is a plastics or metallic material.

3. A process according to claim 1 wherein the lining material is a thin flexible material having a thickness of from 5 to 500 microns.

4. A process according to claim 1 wherein the lining material is a relatively rigid vacuum-formable material having a thickness of from 50 to 1500 microns.

5. A process according to claim 1 wherein the lining material is preformed into a shape by vacuum forming and then placed into the injection moulding tool against the cavity face.

6. A process according to claim 1 wherein the lining material is formed into shape during the injection moulding process by positioning it opposite the injection point of the mould and forming it into the shape of the mould by injection under pressure of the fat-containing confectionery material.

7. A process according to claim 6 wherein the thickness of the lining material is from 10 to 100 microns.

8. A process according to claim 1 wherein the lining material is a laminate of two or more plastics materials or a plastics and a metallic material.

9. A process according to claim 1 wherein the lining material serves as the packaging material for the product.

## Patentansprüche

1. Verfahren zum Spritzgießen eines extrudierten fetthaltigen Süßwarenmaterials, das das Zuführen des fetthaltigen Süßwarenmaterials in eine Extrusionsvorrichtung und das Anwenden von Druck auf das fetthaltige Süßwarenmaterial in einem im wesentlichen festen oder halbfesten nicht gießbaren Zustand stromaufwärts einer Strömungsverengung umfaßt, wobei die Temperatur, der Druck, das Verengungsverhältnis und die Extrusionsrate derart eingestellt sind, daß das fetthaltige Süßwarenmaterial im wesentlichen isotherm extrudiert wird und in einem im wesentlichen festen oder halbfesten nicht gießbaren Zustand bleibt, und eine vorübergehende Flexibilität oder Plastizität aufweist, **dadurch gekennzeichnet, daß**, während das extrudierte Produkt die vorübergehende Flexibilität zeigt, das extrudierte Produkt im wesentlichen isotherm in eine Form spritzgegossen wird, die mit einer entformbaren lebensmittelartigen festen Material ausgekleidet ist, das in die Gestalt der Form formbar ist, und daß dann das Produkt entformt wird, das mit dem lebensmittelartigen festen Material bedeckt ist.

2. Verfahren nach Anspruch 1, bei dem das Auskleidungsmaterial ein Kunststoff- oder Metallmaterial ist.

3. Verfahren nach Anspruch 1, bei dem das Auskleidungsmaterial ein dünnes flexibles Material mit einer Dicke von 5 bis 500 µm ist.

4. Verfahren nach Anspruch 1, bei dem das Auskleidungsmaterial ein relativ festes vakuumverformbares Material mit einer Dicke von 50 bis 1500 µm ist.

5. Verfahren nach Anspruch 1, bei dem das Auskleidungsmaterial in eine Gestalt durch Vakuumverformen vorgeformt ist, und dann in das Spritzgußwerkzeug gegen die Hohlraumfläche angeordnet wird.

6. Verfahren nach Anspruch 1, bei dem das Auskleidungsmaterial in eine Gestalt während des Spritzgußverfahrens geformt wird, indem es gegenüber der Einspritzstelle der Form angeordnet wird, und es in die Gestalt der Form geformt wird, indem das fetthaltige Süßwarenmaterial unter Druck eingespritzt wird.

7. Verfahren nach Anspruch 6, bei dem die Dicke des Auskleidungsmaterials zwischen 10 und 100 µm liegt.

8. Verfahren nach Anspruch 1, bei dem das Auskleidungsmaterial ein Laminat aus zwei oder mehr Kunststoffmaterialien oder einem Kunststoff- und einem Metallmaterial ist.

9. Verfahren nach Anspruch 1, bei dem das Auskleidungsmaterial als das Verpackungsmaterial für das Produkt dient.

## Revendications

1. Procédé pour le moulage par injection d'un produit de confiserie contenant une matière grasse extrudée qui comprend l'introduction du produit de confiserie contenant une matière grasse dans un dispositif d'extrusion et l'application d'une pression au produit de confiserie contenant une matière grasse sous une forme substantiellement solide ou semi-solide, non apte à être versée, en amont d'une constriction d'écoulement, la température, la pression, le taux de contraction et la vitesse d'extrusion étant ainsi tels que le produit de confiserie contenant une matière grasse soit extrudé de manière pratiquement isotherme et reste sous une forme substantiellement solide ou semi-solide, non apte à être versée, et présente une flexibilité ou plasticité temporaire, **caractérisé par**, tandis que le produit extrudé présente la propriété de flexibilité temporaire, le moulage par injection du produit extrudé de manière pratiquement isotherme dans un moule qui est revêtu d'une matière solide démoulable de qualité alimentaire capable d'être façonnée sous la forme du moule, puis le démoulage du produit couvert de la matière solide de qualité alimentaire.

2. Procédé suivant la revendication 1, dans lequel la matière de revêtement est une matière plastique ou une matière métallique.

3. Procédé suivant la revendication 1, dans lequel la matière de revêtement est une matière flexible mince ayant une épaisseur de 5 à 500 micromètres.

4. Procédé suivant la revendication 1, dans lequel la matière de revêtement est une matière relativement rigide façonnable sous vide, ayant une épaisseur de 50 à 1500 micromètres.

5. Procédé suivant la revendication 1, dans lequel la matière de revêtement est préformée sous une forme par formage sous vide et est ensuite placée dans l'outil de moulage par injection contre la face de la cavité.

6. Procédé suivant la revendication 1, dans lequel la matière de revêtement est façonnée sous une forme au cours du procédé de moulage par injection en la plaçant à l'opposé du point d'injection du moule et en la façonnant sous la forme du moule par injection sous pression du produit de confiserie contenant une matière grasse.

7. Procédé suivant la revendication 6, dans lequel l'épaisseur de la matière de revêtement est comprise dans l'intervalle de 10 à 100 micromètres.

8. Procédé suivant la revendication 1, dans lequel la matière de revêtement est un stratifié de deux ou plus de deux matières plastiques ou d'une matière plastique et d'une matière métallique.

9. Procédé suivant la revendication 1, dans lequel la matière de revêtement sert de matériau d'emballage pour le produit.
